# EUROPÄISCHE PATENTSCHRIFT

(11) **EP 2 732 157 B1**
(45) Veröffentlichungstag und Bekanntmachung des Hinweises auf die Patenterteilung: **27.03.2019**
(21) Anmeldenummer: 12716233.7
(22) Anmeldetag: 03.04.2012
(51) Int. Cl.: F03D 80/70, F16F 13/08

(54) **ELASTISCHES, HYDRAULISCHES ODER PNEUMATISCHES DRUCKSPEICHER-LAGER UND SEIN EINSATZ IN WINDKRAFTANLAGEN**
ELASTIC, HYDRAULIC OR PNEUMATIC PRESSURE-ACCUMULATOR BEARING AND THE USE THEREOF IN WIND POWER TURBINES
PALIER ÉLASTIQUE, HYDRAULIQUE OU PNEUMATIQUE À ACCUMULATEUR DE PRESSION ET UTILISATION DUDIT PALIER DANS DES ÉOLIENNES

(30) Priorität: 14.07.2011 EP 11005776
(43) Veröffentlichungstag der Anmeldung: 21.05.2014
(73) Patentinhaber: ESM Energie- und Schwingungstechnik Mitsch GmbH, 64646 Heppenheim (DE)
(72) Erfinder: MITSCH, Franz, 64646 Heppenheim (DE); SCHUMACHER, Tobias, 69502 Hemsbach (DE)
(74) Vertreter: Benz, Jürgen
(86) Internationale Anmeldenummer: PCT/EP2012/001466
(87) Internationale Veröffentlichungsnummer: WO 2013/007322

(56) Entgegenhaltungen:
- EP-A1- 0 430 796
- EP-A1- 1 900 965
- EP-A2- 2 003 362
- DE-A1- 3 214 037
- DE-A1- 4 128 761
- DE-A1- 19 831 605
- DE-B- 1 208 953
- FR-A- 1 307 189
- FR-A5- 2 248 740
- GB-A- 2 150 260
- JP-A- 59 001 830
- US-A- 3 020 856
- US-A- 4 901 986

## Beschreibung

### Gegenstand der Erfindung:

Die Erfindung betrifft ein hydraulisches oder pneumatisches mit elastischen Elementen sowie mit einem Druckspeicher ausgestattetes Lager, welches in der Lage ist, statische Kräfte oder Lasten in einer oder mehreren gewünschten Richtungen aufzunehmen und so andere Lager von diesen Kräften oder Lasten zu befreien oder diese zu verringern. Die Erfindung betrifft weiterhin die Verwendung solcher Lager insbesondere in Windkraftanlagen insbesondere zur Entlastung der Anlage durch Kräfte und Lasten von Generator und / oder Getriebe oder von Turmbefestigungen bei Off-Shore Anlagen. Das erfindungsgemäße Lager kann auch in Kupplungen zwischen Getriebe- und Rotorwelle eingebaut werden, wodurch es gelingt, die Kupplung weitgehend kraftfrei zu machen.

### Technisches Gebiet der Erfindung :

Bei den verschiedensten im Maschinen- und Anlagebau eingesetzten Konstruktionen stellt sich zuweilen die Herausforderung, dass für eine bestimmte Komponente eine statische Unterstützung der Gewichtskraft benötigt wird, die aber gegenüber auftretenden Deformationen möglichst weich sein sollte, damit die vorgegebene statische Kraft bei Bewegungen der Komponente möglichst konstant bleibt.

In einer Windkraftanlage kann eine solche Anforderung beispielsweise entstehen, wenn das Getriebe oder bei einer direktgetriebenen Windkraftanlage auch der Generator mit einer elastomerhydraulischen Lagerung versehen ist, die in ihrem Funktionsprinzip keine vertikale Kraftunterstützung des Getriebes oder Generators bietet. Eine solche hydraulische Drehmomentstütze ist beispielsweise in der EP2003362 A2 beschrieben. Das bedeutet, dass auslegungsgemäß die Gewichtskraft des Getriebes oder Generators an der Rotorwelle hängt. Wenn diese Gewichtskraft sehr groß ist oder die Rotorwelle sehr lang, kann das zu unerwünscht großen Belastungen und Beanspruchungen für die Rotorwelle, die Flanschverbindung und/oder die Wälzlagerung führen, und überdies gefürchtete Schwingungen der Anlage oder einzelner Komponenten bewirken.

Die einfachste Lösung des Problems der Aufnahme einer gleichbleibenden Gewichtskraft ist eine konventionellen Stahlfeder oder Elastomerfeder nach dem Stand der Technik. Diese müssen aber in Bezug auf die erforderlichen Lasten/Kräfte zumeist sehr groß gewählt werden und erweisen sich damit in der Regel als konstruktiv kaum realisierbar oder ungeeignet.

Eine weitgehend konstante statische Stützkraft kann nach dem Stand der Technik auch über einen üblichen Hydraulikzylinder mit angeschlossenem Druckspeicher realisiert werden. Dabei sind jedoch bei vielen sehr kleinen Bewegungen die Dichtungen des Hydraulikzylinders starkem Verschleiß ausgesetzt, so dass dieses System sehr "leakage"-anfällig ist. Überdies sind übliche Hydraulikzylinder für Windkraftanlagen oft schon wegen der baulichen Gegebenheiten sowie der besonderen Lasten und Kräfte nicht optimal geeignet.

Es bestand somit die Aufgabe, ein einfaches aber wirksames System zur kraftfreien Aufnahme der genannten Lasten eines Generators, eines Getriebes, oder eines anderen Maschinenteils, aber auch von anderen Kräften, bei der Verwendung in Windkraftanlagen zur Verfügung zu stellen, um somit andere empfindliche Lager und Bauteile vor Lastkräften oder Bewegungskräften zu schützen.

### Zusammenfassung der Erfindung

Die Aufgabe ist durch die Merkmale des Anspruchs 1 gelöst. Im Einzelnen betrifft die Offenbarung:
- Ein hydraulisches oder pneumatisches Druckspeicherlager, das im Wesentlichen (i) ein hydraulisch oder pneumatisch vorgespanntes Elastomerelement (2) umfasst, welches einen Verdrängungsraum (17) für ein Gas oder eine Flüssigkeit aufweist, und (ii) einen Druckspeicher (7), welcher mit einem Gas und / oder Flüssigkeit betrieben wird, wobei Druckspeicher und Elastomerelement miteinander in Verbindung stehen und Zuläufe (13) aufweisen für die Zufuhr von Flüssigkeit und / oder Gas sowie Vorrichtungen zum Einstellen und Regulieren (8) (9) der Menge bzw. des Druckes besagter Flüssigkeit oder besagtem Gases.
- Ein entsprechendes hydraulisches oder pneumatisches Lager, bei dem der Druckspeicher (7) in das Elastomerelement (2) baulich integriert ist.
- Ein entsprechendes pneumatisches Lager bei dem Druckspeicher (7) ein Gas-Druckspeicher ist, und der Verdrängungsraum (17) der Elastomereinheit (2) mit Gas gefüllt ist.
- Ein entsprechendes hydraulisches Lager, bei dem das Elastomerlager (2) einen mit Flüssigkeit gefüllten Verdrängungsraum im Inneren aufweist, durch dessen Kompression oder Dekompression die Steifigkeit und damit Vorspannung des Elastomers und damit des Lagers (2) eingestellt wird. Diese Ausführungsform weist optional eine Druckmembran (11) im Inneren des Verdrängungsraumes (17) auf, um zu verhindern, dass hydraulische Flüssigkeit in das elastische Material eindiffundiert. Die hydraulische Flüssigkeit wird optional von den Membranen (11) im Elastomerteil und (7) im Druckspeicher umgeben.
- Ein entsprechendes hydraulisches Lager, bei dem der Druckspeicher (7) ein Gas/Flüssigkeitsdruckspeicher ist.
- Ein entsprechendes hydraulisches Lager, bei dem hydraulische Flüssigkeit sich im Verdrängungsvolumen (17) im Elastomerlager (2) befindet und durch die Einrichtungen (8), (9) und (13) komprimiert und dekomprimiert werden kann, sowie Gas sich im Druckspeicher (7) befindet und durch die Einrichtungen (8), (9) und (13) komprimiert und dekomprimiert werden kann. Die Einstellung erfolgt in der Weise, dass der Vorfülldruck im Druckspeicher (7) dem erforderlichen statischen Fülldruck der zu stützenden Lasten angepasst ist.
- Ein hydraulisches oder pneumatisches Lager wie oben beschrieben, bei dem die Elastomerschicht (2a) des Elastomerlagers (2) Zwischenbleche (10) aufweist, und eine Membran (11) aufweist, welche die Elastomerschicht vom Verdrängungsraum (17) trennt.
- Die Verwendung des oben beschriebenen Druckspeicherlagers zur Vermeidung oder Reduzierung hoher statischer Lasten, insbesondere Extremlastspitzen oder Drehmomentspitzen, oder zur Bereitstellung einer konstant zu haltenden, gerichteten Kraft in Windkraftanlagen.
- Die Verwendung eines solchen Stützlagers in Windkraftanlagen mit direkt getriebenem Generator zur Aufnahme der Gewichtskraft desselben, oder eines Getriebes, oder der Rotorwelle im Abschnitt nach dem Hauptlager (14).
- Die entsprechende Verwendung zur Vermeidung oder Reduzierung hoher radialer Lasten auf das Hauptlager (14) des Rotors der Windkraftanlage.
- Die Verwendung eines entsprechenden Druckspeicherlagers als hydraulische Drehmomentstütze (12) im Bereich des Generators, des Getriebes oder der Rotorwelle, wobei vorzugsweise die hydraulische Drehmomentstütze die Form und Ausführung des Elastomerlagers (2), wie oben aufweist. In eine besonderen Ausführungsform sind zwei oder mehr hydraulische Drehmomentstützen (12) radial um den Getriebe- / Generatorblock angeordnet.
- Die Verwendung eines Druckspeicherlagers, wie beschrieben, für den Einbau in Kupplungen, vorzugsweise von Kupplungen zwischen Getriebewelle und Generatorwelle bei Windkraftanlagen, wodurch die Kupplung nahezu kräftefrei ist.
- Die Verwendung eines Druckspeicherlagers, wie beschrieben, zur Abstützung von Grout-Verbindungen in Monopile-Fundamenten von Off-Shore Windkraftanlagen. Die Druckspeicher können auch nachträglich eingebaut werden, wodurch eingetretene Absenkungen korrigiert werden können.
- Eine Kupplung, umfassend ein entsprechendes hydraulisches oder pneumatisches Druckspeicherlager, wobei mindestens zwei Wellen über mindestens zwei Druckspeicherlager miteinander direkt oder indirekt verbunden sind.

### Genauere Beschreibung der Erfindung:

Das hydraulische Stütz- oder Druckspeicherlager besteht im Wesentlichen und im Prinzip aus einem hydraulisch oder auch pneumatisch vorgespannten Elastomerelement (2) und einem damit verbundenen Druckspeicher (7). Der Druckspeicher kann in jeder beliebigen Bauform ausgeführt sein, so beispielsweise als Membranspeicher, Blasenspeicher, oder Kolbenspeicher, wie sie im Stand der Technik beschrieben und vielfach eingesetzt werden.

Hydraulisch oder pneumatisch vorgespannte Elastomerelemente sind im Prinzip ebenfalls bekannt. In der EP 2003362 A2 wird ein solches Federelement, das aus Elastomermaterial, Blechen und einen durch eine Druckmembran abgeschlossenen Hohlraum besteht, beschrieben, einschließlich seiner Verwendung als Zwei- oder Mehrpunktlagerung bei Rotor- und Getriebekonstruktionen.

Das erfindungsgemäße hydraulisch-elastomere Stützlager, umfasst nun im Prinzip ein solches wie in der EP 2003362 beschriebene Elastomerelement jedoch in Verbindung mit einem Druckspeicher. Durch ein solches System aus an sich bekannten Elementen kann überraschenderweise ein sehr effektives und nur wenig Raum benötigendes Stützlager insbesondere für Windkraftanlagen, bereitgestellt werden, welches für die kraftfreie Aufnahme von Stützlasten, Extremlastspitzen, Drehmomentspitzen und ähnlichen Kräften, wie sie beispielsweise von einem Generator oder einem Getriebe verursacht werden, bestens geeignet ist. Dass erfindungsgemäße Stützlager kann aber auch zur Bereitstellung einer konstant zu haltende gerichteten Kraft, beispielsweise einer Anpresskraft, dienen.

Das erfindungsgemäß eingesetzte Elastomerelement ist dabei zwischen der zu unterstützenden Komponente (Getriebe, Generator oder andere Lastkomponente (1)) und der sie tragenden Rahmenkonstruktion / Maschinenträger (6) angebracht, wohingegen der Druckspeicher (7) direkt in das Elastomerelement integriert ist.

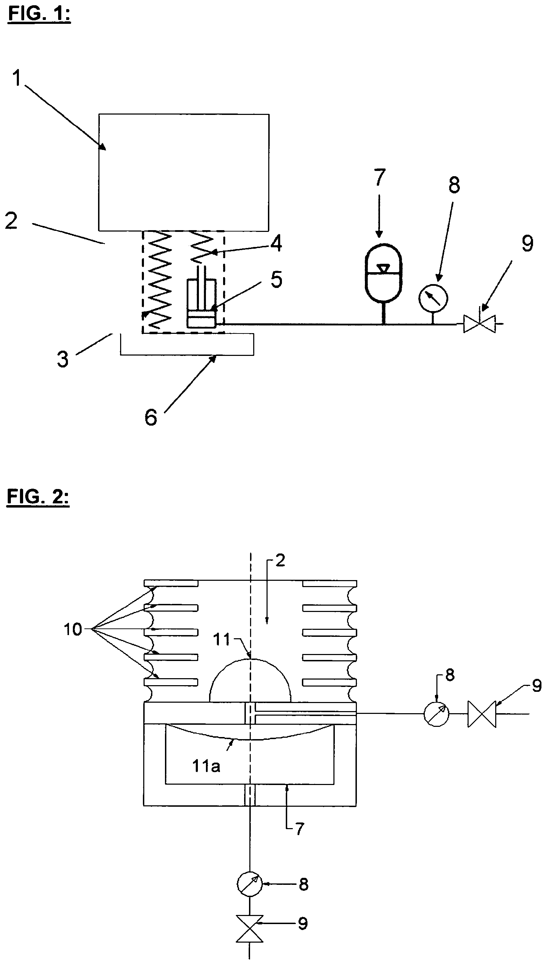

Dies ist in Abb. 2 dargestellt. Im mechanischen Funktionsbild (Abb. 1) kann das hydraulisch vorgespannte Elastomerelement (2) als eine weiche Feder (3) dargestellt werden, zu der parallel eine steife Feder (4) mit in Reihe geschaltetem hydraulischem Kolben (5) angeordnet ist (Hydraulikzylinder). Eine solche Bauliche Lösung hat sich aber speziell in Windkraftanlagen als äußerst störanfällig erwiesen.

Erfindungsgemäß wird nun über den Fülldruck der Hydraulikkammer die jeweils benötigte statische Stützkraft genau eingestellt. Diese richtet sich nach der Stützlast, bzw. dem Gewicht der zu stützenden Vorrichtung (z.B. Generator).

Bei einer Bewegung der unterstützten Komponente (1) wirkt nur die weiche Federkennlinie des hydraulisch vorgespannten Elastomerelements (Pos. 3) als Feder sowie die "Gasfeder" des Druckspeichers (7). Damit sind die Reaktionskräfte auf die Komponente aufgrund dieser Bewegung sehr klein oder nicht mehr vorhanden, und die statische Stützkraft bleibt weitgehend konstant.

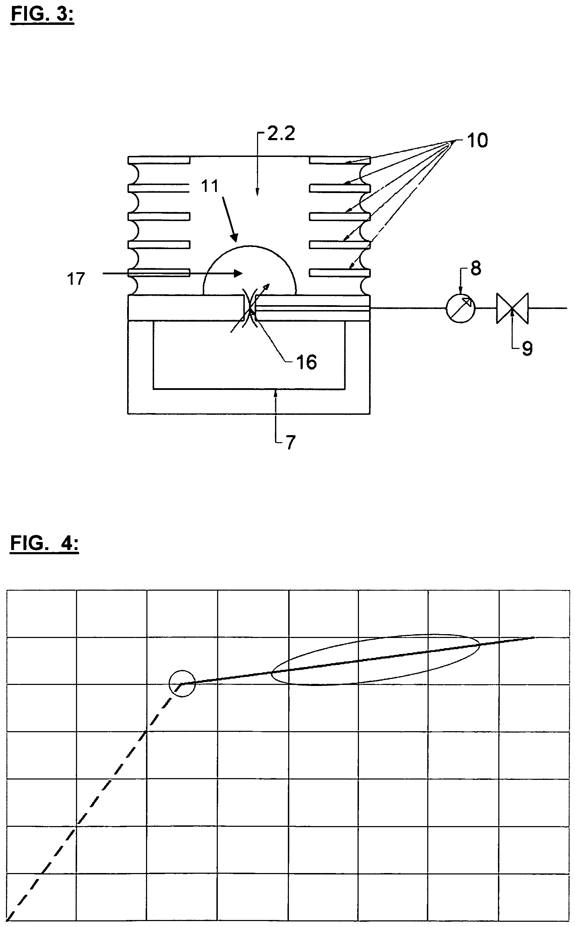

Der Vorfülldruck des Druckspeichers ist erfindungsgemäß so zu wählen, dass er dem erforderlichen bzw. gewünschten statischen Fülldruck des Systems entspricht. Abbildung 4 zeigt eine exemplarische Steifigkeitskennlinie des erfindungsgemäßen hydraulischen Stützlagers. Der Knickpunkt der Kennlinie (Markierung B) wird durch den Vorfülldruck des Druckspeichers bestimmt. Der übliche Arbeitsbereich des hydraulischen Stützlagers liegt im Bereich der flachen Kennlinie auf hohem Kraftniveau (Markierung A).

Die Überwachung des Fülldrucks (Gas oder Flüssigkeit) und damit der statischen Stützkraft kann optional über einen Manometer oder Drucksensor (8) erfolgen. Die Zufuhr von Gas oder Flüssigkeit erfolgt über die Leitungen (13). Je nach Dimensionierung der Durchmesser der Bleche (10) und der Druckmembran (11) in dem hydraulisch vorgespannten Elastomerelement (2) sowie der wirksamen Kolbenfläche des funktionellen Hydraulikkolbens (5) (Abb. 1), bzw. des gewählten wirksamen Verdrängungsvolumens (17) kann somit das Verhältnis zwischen benötigter statischer Stützkraft und Fülldruck des Systems beeinflusst werden.

In einer bevorzugten Ausführungsform der Erfindung ist das Verdrängungsvolumen (17) im Elastomerelement (2) mit Flüssigkeit gefüllt, welche mit der Flüssigkeit im Druckzylinder (7) in Verbindung steht. Der Druckzylinder ist in diesem Fall ein Gas-/Flüssigkeits-Druckspeicher (7). Sowohl Druckspeicher als auch Elastomerelement (2) können separate Zuläufe für Flüssigkeit und / oder Gas besitzen.

Abbildung 2 zeigt eine Ausführungsform der Erfindung, bei welcher der Druckspeicher (7) ein Gas-/Flüssigkeits-Druckspeicher ist und in den Fuß des Elastomerelementes integriert ist. Die hydraulische Flüssigkeit wird von den Druckmembranen (11) und (7a) eingeschlossen. Das erfindungsgemäße Stützelement kann nunmehr durch Voreinstellungen über die gegebenenfalls separaten Zuläufe für Gas (Druckspeicher) und hydraulischer Flüssigkeit (Elastomerteil) in Bezug auf die abzustützenden Kraft am oberen Teileingestellt und reguliert werden.

In einer anderen Ausführungsform der Erfindung ist die Hydraulikflüssigkeit im Elastomerelement (2) bzw. im Verdrängungsvolumen (17) durch ein Gas ersetzt. Prinzipiell entspricht diese Variante einem Pneumatik-Zylinder, welcher mit Druck beaufschlagt wird, um die Gewichtskraft abzufangen. Alle weiteren Verformungen bzw. Kräfte komprimieren nun zusätzlich das Gasvolumen. Je größer dieses Gasvolumen ausfällt, desto geringer ist die zusätzlich aufgebrachte Kraft. Damit bei einem Defekt des Elastomerelementes (2) keine größere Menge an komprimierter Luft schlagartig freigesetzt werden kann, ist in einer weiter verbesserten Ausführungsform des erfindungsgemäßen Stützlagers eine Drossel (16) oder eine entsprechend funktionsgleiches Bauteil integriert, welche das schlagartige Entweichen der gesamten Gasmenge verhindert. Diese Drossel (16) kann in den unterschiedlichsten Ausführungsformen (Drossel, Blende, langes / dünnes Rohr) ausgebildet sein. Wird nun eine zusätzliche Kraft aufgebracht, wird das Gas innerhalb der Elastomerfeder (2) komprimiert und durch die Drossel (16) geleitet. Hierdurch wird eine zusätzliche Dämpfung in das System eingebracht, da dem System Energie durch Wärmeentwicklung innerhalb der Drossel entzogen wird. Der Vorteil dieser Variante liegt darin, dass das die separate Gaszuführung im Druckspeicher (7), die Membran (7a) in diesem Bauteil als auch die Membran (11) eingespart werden können. Alternativ zu dieser 100% pneumatischen Lösung kann auch eine Lösung umgesetzt werden, bei der die Hohlräume mit einer Mischung aus Flüssigkeit und Gas gefüllt werden.

Es wurde weiterhin gefunden, dass sich die erfindungsgemäßen Lager besonders vorteilhaft als Stützlager bei der Abstützung von Grout-Verbindungen in Monopile-Fundamenten von Off-Shore Windkraftanlagen eingesetzt werden können. Off-Shore Anlagen haben das Problem, dass sie dazu neigen, sich abzusenken, oftmals auch ungleichmäßig. Durch den Einsatz der erfindungsgemäßen Druckspeicherlager gelingt es, die Fundamentkonstruktion durch Aufnahme der vertikal einwirkenden starken Schubkraft nicht nur stabil zu halten, sondern auch bei bereits erfolgter Absenkung, durch Einbringung von Hydraulikflüssigkeit die Konstruktion wieder anzuheben.

Es wurde weiterhin gefunden, dass die oben und beschriebenen Druckspeicherlager nicht nur als reine Stützlager in Windkraftanlagen eingesetzt werden können, sondern auch in Kupplungselementen, z.B. zwischen Getriebewelle und Rotorwelle. Hierdurch wird nicht nur die Kupplung selbst nahezu lastfrei; die hydraulisch-elastischen Druckspeicherlager vermögen auch - entsprechend ihrer konstruktiven Anordnung in der Kupplung - an den Wellen und an / in der Kupplung selbst angreifende Bewegungskräfte und Schwingungen abzuschwächen.

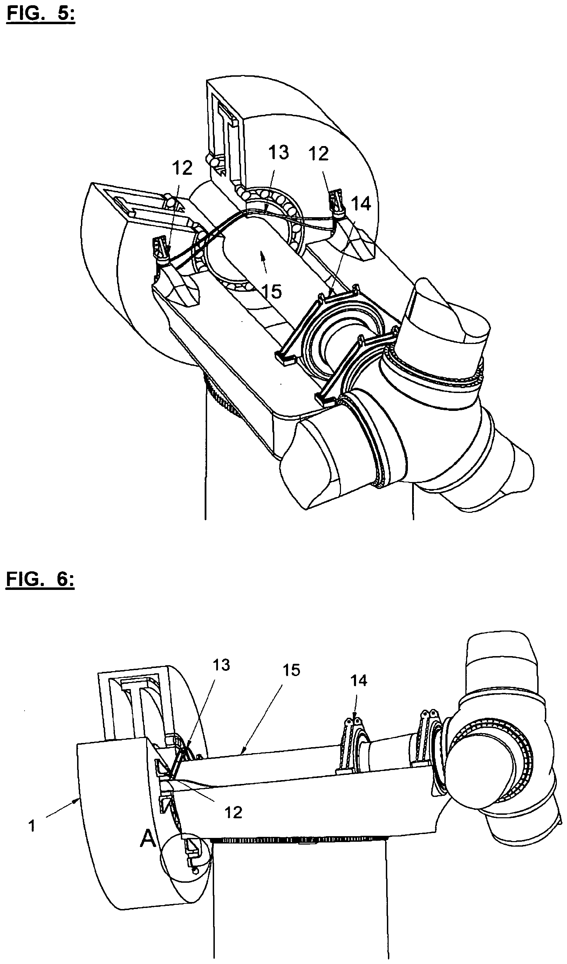

Das erfindungsgemäße Stützlager kann bei einer Windkraftanlage mit einem direkt getriebenen Generator mit oder ohne hydraulischer Drehmomentabstützung gemäß der Abbildungen 5 - 8 eingesetzt werden. Abbildung 5 zeigt so einen Generator (1), der an der doppelt gelagerten Rotorwelle (15) befestigt ist und sich am Maschinenträger (6) über die hydraulische Drehmomentstütze (12, 13) abstützt. Damit wird zwar, wie in der EP 2 003 362 näher beschrieben, das Drehmoment des Generators sicher übertragen, die Gewichtskraft hängt jedoch vollständig an der Rotorwelle, was zu einer starken Umlaufbiegebelastung der Rotorwelle und zu hohen radialen Lasten auf die Hauptlager (14) führt. Mit Hilfe des erfindungsgemäßen hydraulischen-elastischen oder pneumatisch-elastischen Druckspeicherlagers kann nunmehr die Gewichtskraft des Generators nach Belieben ganz oder teilweise getragen und die Rotorwelle entsprechend entlastet werden. Für diese Zwecke geeigneten erfindungsgemäßen Lager weisen beispielhaft die folgenden Parameter in Bezug auf die erforderlichen gängigen Größen und Beschaffenheit auf (Tab. 1). Es sind aber eine Vielzahl von anderen Kombinationen und Eigenschaften der verwendeten Komponenten möglich.

**Tabelle 1:**

| Nennkraft im Arbeitspunkt [kN] | Ca. Abmessungen hydr. vorgesp. Elastomerelement [mm] | Ca. Steifigkeit Arbeitsbereich A [kN/mm] | Ca. Vorfülldruck Druckspeicher [bar] |
|---|---|---|---|
| 50 | Ø=130 | 5 | 40 |
| | H=95 | | |
| 500 | Ø=240 | 25 | 140 |
| | H=114 | | |
| 1000 | Ø=300 | 20 | 150 |
| | H=143 | | |

Bei den oben beschriebenen Konstruktionen wird nur unter Extremlast Flüssigkeit in den Druckspeicher (7) hinein verschoben. Während Betriebslast übernimmt der Druckspeicher (7) hingegen keinerlei Aufgabe. Die Aufgabe des Druckspeichers (7) besteht in diesem Fall darin Extremlastspitzen abzupuffern. Eine zusätzliche Dämpfung unter Betriebslast ist somit nicht gegeben.

Wird der Gasdruck des Druckspeichers (7) auf der Entlastungsseite der Elastomerelemente (2) so bemessen, dass die Membran (17) im belastungsfreien Zustand bereits eingefedert ist, kann auch im Betriebslastfall schon zusätzliche Dämpfung erzielt werden. Wird nun ein äußeres Moment aufgegeben, so werden die belasteten Elastomerelemente (2) eingefedert und die Elastomerelemente (2) auf der Entlastungsseite ausgefedert. Diese Ausfederung führt zu einer Vergrößerung des Volumens innerhalb der Elastomerelemente (2) auf der Entlastungsseite. In diesem Moment ist der Fülldruck innerhalb des Druckspeichers (7) größer als der Hydraulikdruck in den entlasteten Elastomerelementen (2). Es kommt somit zu einem Druckausgleich. Dies führt dazu, dass Flüssigkeit aus dem Druckspeicher (7) in das Elastomerelement (2) fließt. Hierdurch wird dem System Energie entzogen, was sich in einem Anstieg der Dämpfung bemerkbar macht. Dieser Effekt ist positiv, da hierdurch das Schwingbestreben der Anlage minimiert wird. Im Gegensatz zu den oben beschriebenen Konstruktionen bewegt sich hierbei die Membran (11a) des Druckspeichers (7) auf der Entlastungsseite permanent unter Betriebslast.

Der Druckspeicher (7) auf der Belastungsseite hat keinen Einfluss auf die Dämpfung unter Betriebslast, da der Fülldruck größer ist. Allerdings ist es auch auf der Belastungsseite vorstellbar, eine Membranbewegung des Druckspeichers (7) während Betriebslast oder einer frei gewählten Belastungsgrenze zuzulassen. Hierdurch kann gezielt Einfluss auf Steifigkeitskennlinie der Elastomerelemente (2) genommen werden, um diese optimal an die Konstruktion anzupassen.

Das Dämpfungsverhalten kann über eine Drossel (16) am Eingang des Druckspeichers eingestellt werden. Auf diese Drossel (16) kann verzichtet werden, wenn der Durchmesser und die Länge des Hydraulikschlauchs (13) auf der Entlastungsseite hinsichtlich optimaler Dämpfung ausgelegt wird.

Zusätzlich ist es vorstellbar in unterschiedlichen Fließrichtungen unterschiedliche Drosselwerte zu realisieren.

Der Druckspeicher (7) ist erfindungsgemäß im Elastomerbauteil (2) integriert, wie es in Abbildung 2 und 3 dargestellt ist.

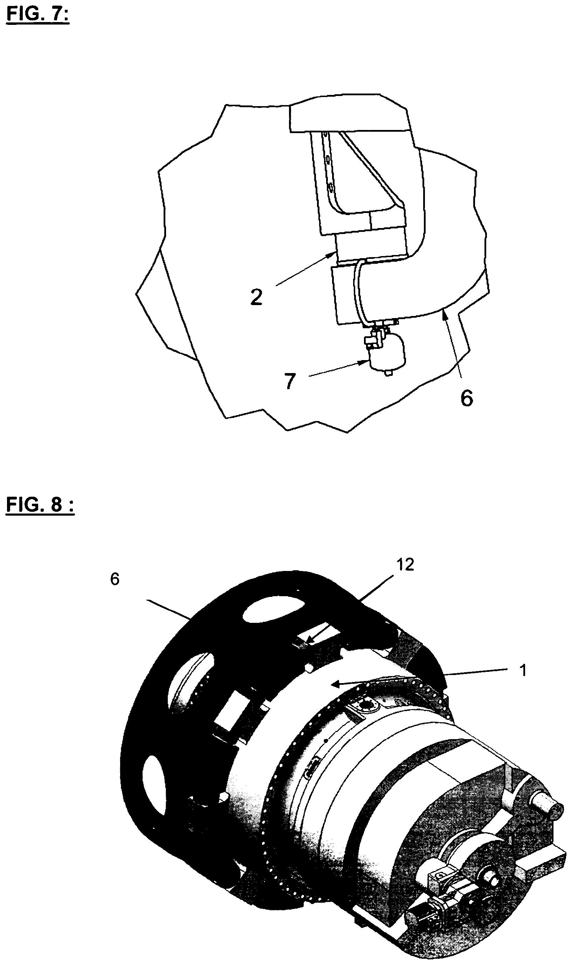

Gleichermaßen kann das erfindungsgemäße hydraulische Stützlager auch eingesetzt werden, wenn ein Getriebe oder ein Generator (1) ähnlich der Darstellung in Abbildung 8 mit einer ringförmig angeordneten hydraulischen Drehmomentabstützung (12) am Maschinenträger (6) befestigt ist. Auch in dieser Anordnung kann die Drehmomentabstützung auslegungsgemäß das Gewicht des Getriebes nicht tragen, so dass eine zusätzliche Gewichtsunterstützung nötig sein kann, was durch Bereitstellung des erfindungsgemäßen Stützlagers geschieht.

Eine weitere Anwendungsmöglichkeit ist in einer Windkraftanlage auch dann gegeben, wenn der Generator direkt am Getriebe angeflanscht ist. Wenn dann das Gewicht des Generators mit dem beschriebenen erfindungsgemäßen hydraulischen Stützlager getragen wird, kann der Flansch zwischen Getriebe und Generator und damit auch das komplette Gehäuse deutlich leichter ausgeführt werden.

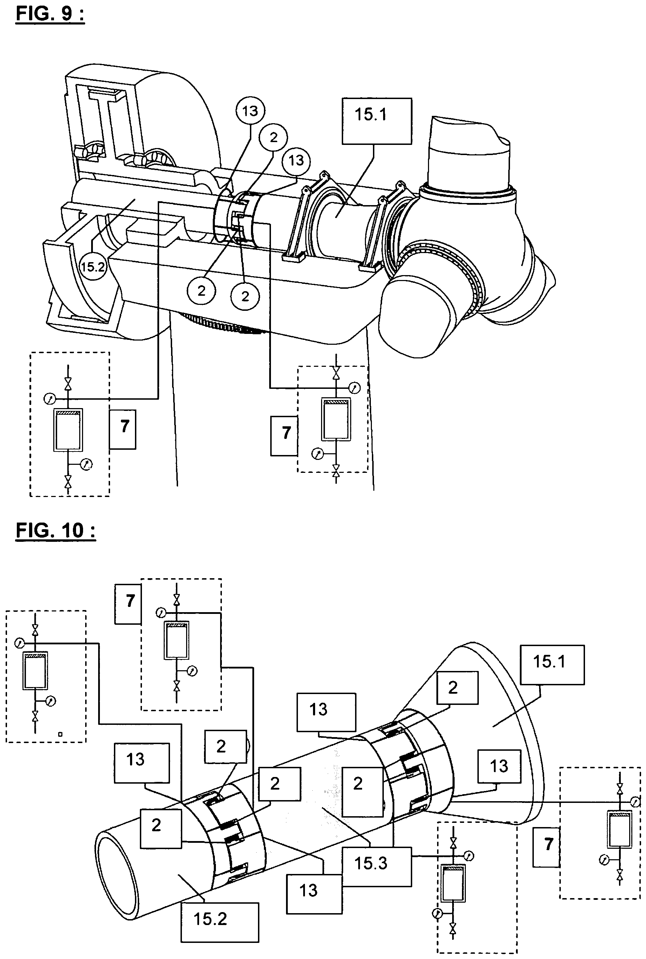

Neben den oben genannten Einsatzmöglichkeiten in Windkraftanlagen kann das hydraulische Stützlager auch in jedem anderen Anwendungsfall eingesetzt werden, bei dem eine konstant wirkende Kraft benötigt wird, die gleichzeitige Deformationen ohne signifikante Kraftschwankungen ermöglichen muss. Eine solche Anwendung kann beispielsweise die konstant zu haltende Anpresskraft auf Mahlkörper oder ähnlicher funktioneller Bauteile sein. Hierüber hinaus ist jeder Einsatz vorstellbar, bei dem ein hoher Dämpfungswert oder eine, an die äußeren Randbedingungen, angepasste Kennlinie der Federsteifigkeit der Elastomerelemente (2) gewünscht ist. Eine sehr interessante Anwendung der erfindungsgemäßen hydraulisch-elastischen oder pneumatisch-elastischen Druckspeicherlager sind Kupplungen, insbesondere bei Kupplungen von Windkraftanlagen. Dabei kann man zwischen zwei grundsätzlichen Varianten unterschieden. Zum einen Kupplungen, welche in einer Ebene aufgebaut sind (Abb. 9), zum anderen Kupplungen, die in zwei Ebenen aufgebaut sind (Abb. 10). Beide Varianten haben gemeinsam, dass zwischen den Kupplungsklauen der beiden Rotorwellen (15.1, 15.2, 15.3) Elastomere mit Hydraulikammern (2) verbaut sind. Das Elastomerelement (2) übernimmt somit folgende Aufgaben:
(i) Übertragung von Drehmoment, sowie
(ii) Ausgleich von Verlagerungen der beteiligten Wellen zueinander, beispielsweise hervorgerufen durch Montagetoleranzen, Verformungen während Betrieb oder bei Fertigungstoleranzen.

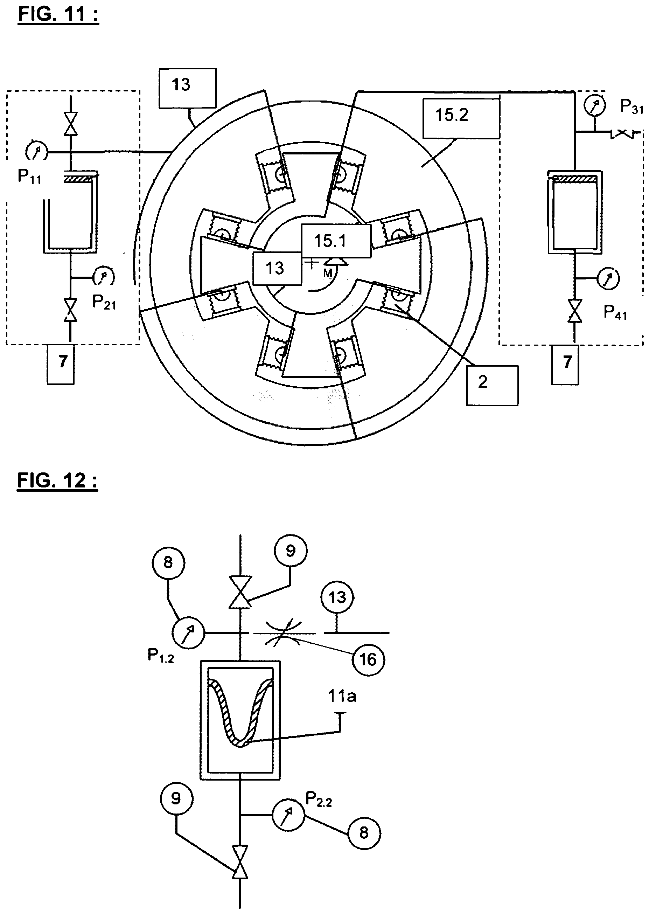

Alle Elastomerelemente (2) auf der Belastungsseite und alle Elastomerelemente (2) auf der Entlastungsseite sind getrennt voneinander mit Hydraulikleitungen (13) verbunden. Hierdurch entsteht ein Hydraulikkreislauf der Belastungsseite und ein separater Hydraulikkreislauf der Entlastungsseite. In diese beiden Hydraulikkreisläufe ist jeweils ein Druckspeicher (7) integriert (siehe Abbildung 9, 10, 11).

Bei der Montage der Kupplung, werden die Wellen (15.2, 15.1, 15.3) zueinander ausgerichtet. Hiernach werden die Elastomerelement (2) in die entstehenden Aussparungen zwischen den Klauen mit Spiel eingeschoben und beide Kreisläufe mit Druck beaufschlagt. Dies führt dazu, dass die Elastomerelement (2) länger werden und sich in den Klauen verspannen. Zudem ist es vorstellbar die drucklosen Elastomerelemente (2) vorzuspannen, in den Zwischenraum der Klauen einzuführen, dort zu entspannen und erst hiernach mit Druck zu beaufschlagen.

Getrennt hiervon wird der Druckspeicher (7) mit Druck beaufschlagt. Dieser Fülldruck ist größer wie der entstehende Hydraulikdruck innerhalb der Elastomerelemente (2) bei Nennlast. Somit wird der Druckspeicher (7) bei Nennlast nicht benötigt. Die Membran (11a) innerhalb des Druckspeichers (7) bewegt sich in diesem Stadium nicht. Bei Nennlast steigt der Hydraulikdruck in den Elastomerelementen (2) jedoch auf der jeweiligen Belastungsseite bei Extremlast stark an. Dies führt dazu, dass der Hydraulikdruck in den Elastomeren (2) über den Fülldruck des Druckspeichers (7) ansteigt. Bei Extremlast bewegt sich die Membran (11a) innerhalb des Druckspeichers (7) und ermöglicht so eine Volumenverschiebung aus den Elastomerelementen (2) heraus in den Druckspeicher (7). Der Verformungsweg der Elastomere (2) vergrößert sich somit. Hierdurch wird die schlagartige Belastungsspitze der Extremlast über einen größeren Verformungsweg der Elastomerelementen (2) abgepuffert. Die Belastung auf alle, im Kraftfluss befindlichen Komponenten, wird hierdurch reduziert. Dies wiederum reduziert die Kosten für Bauteile innerhalb des Antriebsstrangs, da die dimensionierende Belastungsspitze während Extremlast reduziert wird und Bauteile weniger massiv gebaut werden müssen. Hierdurch wird zudem die Systemdämpfung erhöht, da das Verschieben der Hydraulikflüssigkeit dem System Energie entzieht und somit dem Schwingverhalten der Anlage entgegenwirkt.

Es ist bei den erfindungsgemäßen Kupplungen nicht zwingend erforderlich, dass vier Paare von Elastomerelementen verbaut werden. Es ist jede Anzahl von Paaren von Elementen größer als zwei vorstellbar.

Außerdem können in den erfindungsgemäßen Druckspeicherlagern die Elastomerelemente lediglich auf der Belastungsseite Hydraulikkammern verbaut werden. Auf der Entlastungsseite können Elastomerelemente ohne Hydraulik verbaut werden. Diese Version setzt voraus, dass das Extremlast-Moment immer in die Richtung wirkt, auf der sich die Elastomerelemente mit Hydraulikkammern befinden.

Ein weiterer wichtiger Anwendungsfall des elastomer-hydraulishen Stützlagers ist die Abstützung von Grout-Verbindungen in Monopile-Fundamenten von Off-Shore Windkraftanlagen. Windenergieanlagen auf See sind extremen Beanspruchungen infolge Wind, Wellen und Betrieb ausgesetzt. Sämtliche Bauteile der Offshore-Tragstrukturen müssen diesen Wechselbeanspruchungen standhalten. Hierzu gehören neben dem Turm auch die Rohr-in-Rohr-Steckverbindungen zwischen den in den Meeresboden gerammten Pfählen und der Tragstruktur. Als Verbindung kommt der "Grouted Joint" zum Einsatz, der aus zwei sich übergreifenden Stahlrohren besteht, wobei der Zwischenraum zwischen den Rohren mit hochfestem Feinkornbeton verfüllt wird.

Unter dem Begriff Monopile-Fundamenten wird die Anbindung des Turms an das verankerte Fundament der Windkraftanlage beschrieben. Hierbei müssen die resultierenden Windlasten der Anlage über diese Verbindung übertragen werden können. Bei vielen bestehenden Monopile-Fundamenten ist die Grout-Verbindung zwischen dem Fundamentrohr (18) (Monopile) und dem Übergangsstück (20) (Transition Piece) nicht in der Lage, die meist seitlich wirkenden Windlasten und das senkrecht wirkende Anlagengewicht dauerfest zu übertragen.

Die tatsächliche axiale Tragfähigkeit der Grout-Verbindung hat sich als deutlich niedriger herausgestellt als bisher bei der Auslegung angenommen. Das führt zu einem Absenken des Übergangsstücks (20) und zu einer Schädigung des Vergussmörtels (19) (Grout-Verbindung).

Mit Hilfe des erfindungsgemäßen Druckspeicherlagers, welches hier als Stützlager fungiert und Elastomerelement mit innenliegender Hydraulikkammer (2) und Druckspeicher (7) umfasst, kann die Grout-Verbindung sehr einfach von der axialen Gewichtslast entlastet werden. Gleichzeit ist die vertikale Verschiebesteifigkeit des Druckspeicher-Stützlagers (2 + 7) sehr gering, so dass auch von außen wirkende Verformungen nicht zu einer Änderung der eingestellten Anhebekraft führen.

Vorteilhafterweise werden mehrere hydraulisch-elastische Stützlager (2+7) gemäß der Erfindung über den Umfang des Übergansstücks (20)und damit der Turmaußenhülle verteilt.

Die erfindungsgemäßen Lager eigenen sich bestens auch für eine Nachrüstung bereits bestehender Off-Shore Anlagen, was mit den bisherigen technischen Lösungen des Standes der Technik nicht, oder nicht einfach realisierbar war. Dabei besteht die Möglichkeit, eine bereits durchgerutschte Grout-Verbindung über die einfache Einstellbarkeit des Fülldrucks und damit der Stützkraft zielgenau anzuheben.

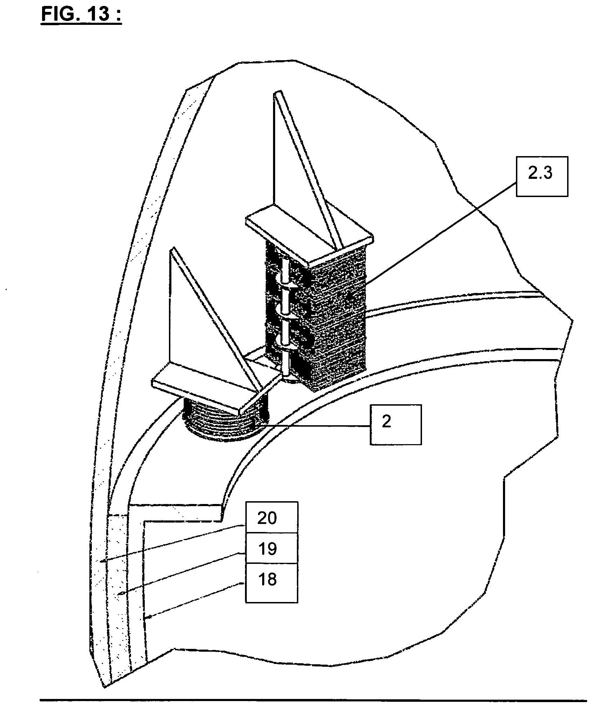

Die Abbildung 13 zeigt als Einbaubeispiel einen Größenvergleich zwischen dem erfindungsgemäßen hydraulischen Stützlager (2+7) und einer konventionellen vielschichtigen Elastomerfeder (2.3). Die bereits oben beschriebene flache Kraft-Weg-Kennlinie kann mit einer konventionellen Elastomerfeder ohne Hydraulikkammer lediglich nur über ein vielschichtiges Bauteil realisiert werden. Es ist denkbar, beide Lagertypen bei einer Off-Shore Anlage gleichzeitig zu verbauen.

Neben der deutlich kompakteren Bauweise ist die Möglichkeit zur kontinuierlichen Drucküberwachung und damit auch zur Überwachung der Stützkraft ein weiterer entscheidender Vorteil des erfindungsgemäßen Druckspeicherlagers.

### Liste der verwendeten Bezugsgrößen und ihre Bezeichnung

- 1: Getriebe/Generator (oder andere Komponente, deren Gewichtskraft getragen werden soll)
- 2: Elastomerelement umfassend die Teile 2a, 11, 17 und ggf. 10
- 2.1: Elastomerelement mit innenliegender Hydraulikkammer
- 2.2: pneumatisch vorgespanntes Elastomerelement
- 2a: Elastomermaterial des Elementes 2
- 3: Weiche Feder im mechanischen Ersatzbild des Elastomerelements (2)
- 4: Steife Feder im mechanischen Ersatzbild des Elastomerelements (2)
- 5: Hydraulischer Kolben im mechanischen Ersatzbild des Elastomerelements (2)
- 6: Maschinenträger
- 7: Druckspeicher
- 8: Drucksensor oder Manometer
- 9: Füllventil
- 10: Zwischenbleche im Elastomerelement (2)
- 11: Membran im Elastomerelement (2)
- 11a: Membran im Druckspeicher (7)
- 12: Hydraulische Drehmomentstütze (optional ausgebildet als Elastomerteil (2))
- 13: Hydraulikleitung
- 14: Hauptlager
- 15: Rotorwelle
- 15.1: Rotorwelle Antrieb
- 15.2: Rotorwelle Abtrieb
- 15.3: Rotorwelle Zwischenwelle
- 16: Drossel
- 17: Hohlraum / Verdrängungsraum im Elastomerelement (2) zur Aufnahme von Flüssigkeit oder Gas
- 18: Fundament-Rohr der Off-Shore Windkraft-Anlage ("Monopile")
- 19: Vergussmörtel (Grout-Verbindung)
- 20: Übergangstück (Transition Piece)
- A: Arbeitsbereich des hydraulischen Stützlagers
- B: Knickpunkt der Kennlinie, bestimmt durch Vorfülldruck des Druckspeichers

Im Folgenden werden die Abbildungen kurz erläutert.
- Abb. 1:: zeigt ein Funktionsbild eines erfindungsgemäßen Stützlagers
- Abb. 2:: zeigt ein erfindungsgemäßes hydraulisch-elastisches Stützlager mit in das Elastomerelement (2) integriertem Druckspeicher mit Flüssigkeit-/Gasfüllung.
- Abb. 3:: zeigt ein erfindungsgemäßes pneumatisches Stützlager mit in das Elastomerelement (2) integriertem Druckspeicher mit Flüssigkeit-/Gasfüllung
- Abb. 4:: zeigt eine Steifigkeitskennlinie eines erfindungsgemäßen Stützlagers. Der Arbeitsbereich des Lagers liegt in dem Bereich zwischen A und B. X-Achse: Weg, Y-Achse: Kraft.
- Abb. 5:: zeigt einen dreidimensionalen Ausschnitt einer Windkraftanlage mit direkt getriebenem Generator und hydraulischer Drehmomentstütze.
- Abb. 6:: zeigt eine Windkraftanlage mit direkt getriebenem Generator, hydraulischer Drehmomentstütze und einem erfindungsgemäßen Stützlager.
- Abb. 7:: zeigt einen Ausschnitt (A) der Abb. 6, welcher vergrößert das erfindungsgemäße Stützlager darstellt.
- Abb. 8:: zeigt in einer 3D-Anordnung ein Windkraftgetriebe mit ringförmig angeordneter hydraulischer Drehmomentstütze, welches durch die erfindungsgemäßen hydraulischen oder pneumatischen Stützlager abgestützt werden (nicht gezeigt).
- Abb. 9:: zeigt einen dreidimensionalen Ausschnitt einer Windkraftanlage mit über eine Kupplung getriebenem Generator, wobei die Rotor-/ Getriebewellen mittels hydraulischen Druckspeicher-Elementen gedämpft werden.
- Abb. 10:: zeigt einen dreidimensionalen Ausschnitt einer Windkraftanlage mit über eine Kupplung getriebenem Generator, wobei die Rotor-/ Getriebewellen über eine Zwischenwelle miteinander verbunden sind und mittels hydraulischen Druckspeicher-Elementen an den Kupplungsbereichen gedämpft werden.
- Abb. 11:: zeigt die Kupplung zwischen Getriebe- und Rotorwellen im Querschnitt mit hydraulischen Druckspeicher-Elementen zwischen den Klauen/Zähnen der Kupplung.
- Abb. 12:: zeigt ein Schema des Druckspeichers unter Last bei den erfindungsgemäßen Lagern und Kupplungen.
- Abb. 13:: Zeigt einen dreidimensionalen Ausschnitt einer Off-Shore Windkraftanlage, mit eingebautem, erfindungsgemäßen Stützlager, welches ein elastomeres Druckspeicher-Element mit innenliegender Hydraulikkammer aufweist.

## Patentansprüche

1. Verwendung eines Druckspeicherlagers im Wesentlichen umfassend
(i) ein hydraulisch oder pneumatisch vorgespanntes Elastomerelement (2), welches einen Verdrängungsraum (17) für ein Gas oder eine Flüssigkeit aufweist, wobei eine Membran (11) Elastomerschicht (2a) des Elastomerelements (2) und Verdrängungsraum (17) voneinander trennt, und die Elastomerschicht Zwischenbleche (10) aufweist, und
(ii) einen mit Gas oder Flüssigkeit betriebenen Druckspeicher (7), der in das Elastomerelement (2) integriert ist,
wobei Druckspeicher und Elastomerelement miteinander in Verbindung stehen und Zuläufe (13) für die Zufuhr von Flüssigkeit und/oder Gas sowie Vorrichtungen aufweisen zum Einstellen und Regulieren (8) (9) der Menge und des Druckes besagter Flüssigkeit oder vom besagten Gas,
als Stützlager in Windkraftanlagen mit direkt getriebenen Generator zur Aufnahme der Gewichtskraft desselben, eines Getriebes oder der Rotorwelle im Abschnitt nach dem Hauptlager (14).

2. Verwendung eines Druckspeicherlagers nach Anspruch 1 zur Vermeidung oder Reduzierung hoher radialer Lasten auf das Hauptlager (14) des Rotors der Windkraftanlage.

3. Verwendung eines Druckspeicherlagers nach Anspruch 1 oder 2 als hydraulische Drehmomentstütze (12) im Bereich des Generators, des Getriebes oder der Rotorwelle.

4. Verwendung eines Druckspeicherlagers nach Anspruch 3, wobei zwei oder mehr Drehmomentstützen (12) eingesetzt werden, welche radial um das Getriebe oder den Generatorblock angeordnet sind.

5. Verwendung eines Druckspeicherlagers nach Anspruch 1 zur Abstützung von Grout-Verbindungen in Monopile-Fundamenten von Off-Shore Windkraftanlagen.

## Claims

1. Use of a pressure accumulator bearing essentially comprising
(i) a hydraulically or pneumatically prestressed elastomer element (2), which has a displacement space (17) for a gas or liquid, where a membrane (11) separates elastomer layer (2a) of the elastomer element (2) and displacement space (17) from one another, and the elastomer layer has intermediate metal sheets (10), and
(ii) a gas- or liquid-operated pressure accumulator (7), which is integrated into the elastomer element (2),
where pressure accumulator and elastomer element are connected to one another and have feed lines (13) for the supply of liquid and/or gas and devices for the adjustment and regulation (8) (9) of the amount and pressure of said liquid or of said gas,
as supporting bearing in wind turbines with directly driven generator for supporting the weight thereof, of a gearbox or of the rotor shaft in the section after the main bearing (14).

2. Use of a pressure accumulator bearing according to Claim 1 for preventing or reducing high radial loads on the main bearing (14) of the rotor of the wind turbine.

3. Use of a pressure accumulator bearing according to Claim 1 or 2 as hydraulic torque bracket (12) in the region of the generator, gearbox or rotor shaft.

4. Use of a pressure accumulator bearing according to Claim 3, where use is made of two or more torque brackets (12), which are arranged radially around the gearbox or generator block

5. Use of a pressure accumulator bearing according to Claim 1 for supporting grout connections in monopile foundations of offshore wind turbines.

## Revendications

1. Utilisation d'un palier accumulateur de pression qui comprend essentiellement :
(i) un élément en élastomère précontraint hydrauliquement ou pneumatiquement (2), lequel comporte un espace de déplacement (17) pour un gaz ou un liquide, dans lequel une membrane (11) sépare une couche en élastomère (2a) de l'élément en élastomère (2) et l'espace de déplacement (17) l'un de l'autre, et la couche en élastomère comporte des feuilles métalliques intermédiaires (10) ; et
(ii) un accumulateur de pression actionné par gaz ou par liquide (7), lequel est intégré à l'intérieur de l'élément en élastomère (2) ;
dans lequel l'accumulateur de pression et l'élément en élastomère sont connectés l'un à l'autre et comportent des lignes d'alimentation (13) pour réaliser une alimentation en liquide et/ou en gaz et des dispositifs pour le réglage et la régulation (8) (9) de la quantité et de la pression dudit liquide ou dudit gaz,
en tant que palier de support dans des éoliennes munies d'un générateur entraîné directement pour supporter son poids, en tant que palier de support d'une boîte de vitesses ou en tant que palier de support de l'arbre de rotor dans la section après le palier principal (14).

2. Utilisation d'un palier d'accumulateur de pression selon la revendication 1 pour empêcher ou réduire des charges radiales élevées sur le palier principal (14) du rotor de l'éolienne.

3. Utilisation d'un palier d'accumulateur de pression selon la revendication 1 ou 2 en tant que support de couple hydraulique (12) dans la région du générateur, de la boîte de vitesses ou de l'arbre de rotor.

4. Utilisation d'un palier d'accumulateur de pression selon la revendication 3, dans lequel deux supports de couple (12) ou plus sont utilisés, lesquels sont agencés radialement autour de la boîte de vitesses ou du bloc générateur.

5. Utilisation d'un palier d'accumulateur de pression selon la revendication 1 pour supporter des connexions à base de coulis de ciment dans des fondations mono-pieux d'éoliennes offshore.
